# EUROPEAN PATENT SPECIFICATION

(11) **EP 3 102 616 B1**
(45) Date of publication and mention of the grant of the patent: **14.10.2020**
(21) Application number: 15709995.3
(22) Date of filing: 03.02.2015
(51) Int. Cl.: C08F 2/01, B01J 31/14, B01J 31/18, B01J 31/02

(54) **CATALYST COMPOSITION PRE-FORMATION UNIT FOR PREPARING A CATALYST COMPOSITION FOR OLIGOMERIZATION OF ETHYLENE**
VORFORMEINHEIT FÜR KATALYSATORZUSAMMENSETZUNG ZUR HERSTELLUNG EINER KATALYSATORZUSAMMENSETZUNG ZUR OLIGOMERISIERUNG VON ETHYLEN
PRÉ-UNITÉ DE FORMATION D'UNE COMPOSITION DE CATALYSEUR POUR LA PRÉPARATION D'UNE COMPOSITION DE CATALYSEUR POUR L'OLIGOMÉRISATION D'ÉTHYLÈNE

(30) Priority: 03.02.2014 US 201461935121 P
(43) Date of publication of application: 14.12.2016
(73) Proprietor: Saudi Basic Industries Corporation, Riyadh 11422 (SA)
(72) Inventor: KHURRAM, Shehzada, Riyadh 11422 (SA); AZAM, Shahid, Riyadh 11422 (SA); AL-QAHTANI, Abdullah Mohammad, Riyadh 11422 (SA); ILIYAS, Abduljelil, Riyadh 11422 (SA); MEISWINKEL, Andreas, 80331 Munich (DE); MUELLER, Wolfgang, 80331 Munich (DE); WOEHL, Anina, 80331 Munich (DE); HARFF, Marco Marco, 80331 Munich (DE); BOELT, Heinz, 80331 Munich (DE)
(74) Representative: Balder IP Law, S.L.
(86) International application number: PCT/IB2015/050826
(87) International publication number: WO 2015/114611

(56) References cited:
- EP-A1- 2 489 431
- CA-A1- 2 249 946
- US-A- 4 768 384
- US-A1- 2003 199 649
- US-A1- 2008 022 658
- US-A1- 2010 267 904

## Description

### TECHNICAL FIELD

Disclosed herein is a pre-formation unit for preparing a catalyst composition for the oligomerization of ethylene and use thereof.

### BACKGROUND

Catalyst systems and processes for the oligomerization of ethylene, in particular for the selective trimerization of ethylene to 1-hexene and/or the tetramerization to 1-octene, have been described in a large body of scientific publications and patent documents.

For example, in EP 1 578 531 B1 a process for tetramerization of ethylene to 1-octene is disclosed, utilizing a catalyst system comprising a chromium source, a co-catalyst or activator (typically an organoaluminum compound) and a heteroatomic ligand that features, at least in some embodiments, a PNP-backbone.

EP 2 489 431 A1 discloses a method for preparing a catalyst composition for the oligomerization of ethylene and a respective catalyst composition pre-formation unit. However, these catalyst compositions comprising a chromium compound, a ligand, a modifier, and an activator, show several disadvantages including the fact that some of the catalyst components are poorly soluble in the aromatic solvents of the process in which the catalyst is formed. This is especially true for the modifier, which is generally considered an indispensable component of the system.

All catalyst constituents need to be meticulously metered into the reactor so as to adjust very precisely catalyst production and to avoid thermal runaways (i.e., side reactions). This requirement prohibits the use of slurry systems or any system for handling solids. For high productivities and high selectivities, the catalyst composition needs to be precisely defined in terms of total chromium concentration and particularly regarding the molar ratios of ligand/chromium, aluminum/chromium, and modifier/chromium.

Preparation of the entire homogeneous catalyst, comprising all of the four components, is not feasible in an industrial (technical) environment, due to the degradation of the catalyst on a timescale of equal or greater than approximately one day. This degradation results in deteriorating activity and increased wax/polymer formation.

Hence, these methods of ethylene oligomerization suffer from side reaction-related plugging of the internal components of the dosing device and/or inability to sufficiently control the amounts of reactants precisely. Thus, what is needed is a method of ethylene oligomerization that overcomes these drawbacks and that allows for precise dosing of the catalyst composition to avoid precipitate formation and side reactions.

### BRIEF DESCRIPTION

The application is defined by the appended claims.
Disclosed herein is a pre-formation unit for preparing a catalyst composition for the oligomerization of ethylene, and methods of making and using the same.

An ethylene oligomerization catalyst pre-formation unit, comprises: a first vessel comprising a solution of co-catalyst and modifier; a second vessel comprising a chromium compound and a ligand; wherein the first and second vessel are connected via lines to a mixing unit, wherein each line has a flow control valve wherein the flow control valves are independently a thermal mass flow controller or a coreolis flow meter; wherein the mixing unit is connected via a line having a flow control valve to an oligomerization reactor; wherein gas inlets are each connected to the first vessel and to the second vessel, and wherein the first vessel, the second vessel, the mixing unit, and the flow control valves are completely within a temperature controlled enclosure.

A method of making a catalyst composition for the oligomerization of ethylene, comprising: preparing, in a first vessel having a first gas inlet, in a first solvent, a first solution by mixing a co-catalyst and a modifier, wherein the co-catalyst is preferably selected from trialkyl aluminum, alkyl aluminum sesquichloride, dialkyl aluminum chloride, alkyl aluminum dichloride, wherein alkyl is preferably methyl, ethyl, isopropyl or isobutyl, methylaluminoxane, or a combination thereof, and wherein the modifier is preferably selected from ammonium or phosphonium salts of the formula [H₄E]X, [H₃ER]X, [H₂ER₂]X, [HER₃]X or [ER₄]X or HX or RX with E is N or P, X is Cl, Br or I and R is alkyl, cycloalkyl, acyl, aryl, alkenyl, alkynyl or the corresponding bridging di-, tri- or multi-units, or ammonium or phosphonium salts based on cyclic amines; adding a chromium compound and a ligand from a second vessel having a second gas inlet to the first solution to obtain a second solution; and optionally mixing the second solution for 10 seconds to 5 hours in a mixing unit; wherein the first vessel, the second vessel, and the mixing unit are completely within the temperature controlled enclosure. Wherein the first and second vessel are connected via lines to a mixing unit, wherein each line has a flow control valve, wherein the flow control valves are independently a thermal mass flow controller or a coreolis flow meter.

The above described and other features are exemplified by the following figure and detailed description.

### BRIEF DESCRIPTION OF THE DRAWINGS

The following figure is an exemplary embodiment wherein like elements are numbered alike.

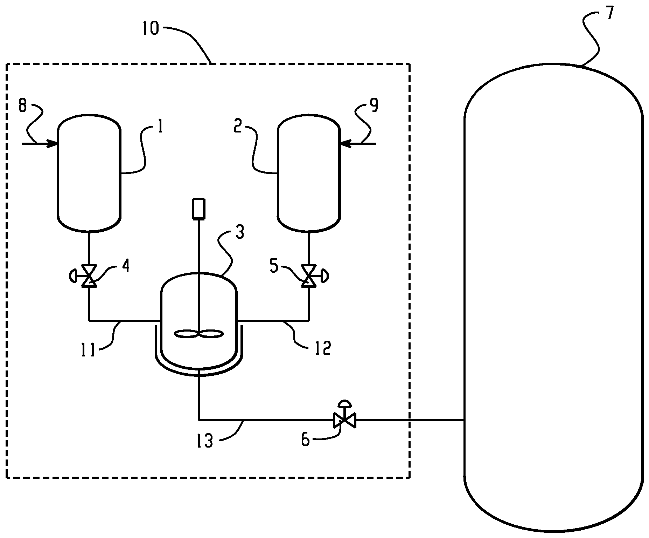

FIG. 1 is a schematic view of a pre-formation unit as described herein.

### DETAILED DESCRIPTION

Disclosed herein is a pre-formation unit to prepare a catalyst composition for the oligomerization of ethylene. A major challenge in dosing catalyst in an oligomerization process is in dosing a precise amount. Due to the very small quantity of catalyst used in the oligomerization process, the devices used in dosing catalyst should generally be very accurate. Such devices can include, but are not limited to thermal mass flow controllers, gear pumps, flow controllers, and the like. Problems can arise in an oligomerization process because the cataylst generally has a high sensitivity to moisture and air, which can cause precipitation leading to small lumps or agglomerated particles. The precipitates formed can clog the internal components of the dosing devices, which can lead to misdistribution of catalyst flow. Such a misdistribution could be a potential threat for a runaway reaction. The pre-formation unit as described herein and used to prepare a catalyst composition for the oligomerization of ethylene can overcome these issues wherein by using the pre-formation unit, a catalyst or its constituents can be precisely dosed in an oligomerization process to help ensure the correct dosing of the catalyst. Such a pre-formation unit can provide an additional benefit of significantly reducing plugging in the dosing device to avoid side reactions which can therefore enhance the process performance.

The pre-formation unit for preparing a catalyst composition for the oligomerization of ethylene can comprise a first vessel comprising a solution of co-catalyst and modifier, and a second vessel comprising a chromium compound and a ligand. The first and second vessel can be connected via lines to a mixing unit, with each line having a flow control valve, with the mixing unit being connected via a line, having a flow control valve, to an oligomerization reactor. Gas inlets can each be connected to the first vessel and to the second vessel.

The first vessel, the second vessel, the mixing unit, the flow control valves and the gas inlets are completely within a temperature controlled enclosure. By containing the first vessel, the second vessel, the mixing unit, the flow control valves and the gas inlets completely within the temperature controlled enclosure, plugging can be reduced and/or avoided as well as reductions in the occurrence of side reactions.

In an embodiment, the mixing unit can be a vessel comprising agitation means, for example a stirrer having a paddle blade, a screw blade, a propeller blade, a turbine blade, or the like; in-line flow agitator elements, such as rings; and shakers.

The flow control valves in each line can be the same or different, and are thermal mass flow controllers or coreolis flow meters. Flow control valves such as diaphragm values, butterfly valves, or ball valves cannot guarantee precision dosing and thus, would not function properly as a flow control valve in the ethylene oligomerization catalyst pre-formation unit disclosed herein.

The catalyst composition used in the pre-formation unit comprises a chromium compound, a ligand, a modifier, and a co-catalyst.

The catalyst composition for the oligomerization of ethylene can be prepared by a method comprising preparing, in the first vessel having a first gas inlet, in a first solvent, a first solution by mixing a co-catalyst and a modifier, wherein the co-catalyst can be selected from trialkyl aluminum, alkyl aluminum sesquichloride, dialkyl aluminum chloride, or alkyl aluminum dichloride, wherein the alkyl can be methyl, ethyl, isopropyl or isobutyl, methylaluminoxane (MAO) or mixtures thereof, and wherein the modifier can be ammonium or phosphonium salts, for example salts of the formula [H₄E]X, [H₃ER]X, [H₂ER₂]X, [HER₃]X, or [ER₄]X or HX or RX wherein E is N or P, X is Cl, Br or I and each R is independently a halogen, amino, trimethylsilyl, substituted or unsubstituted C₁-C₁₂ alkyl, substituted or unsubstituted C₃-C₈ cycloalkyl, substituted or unsubstituted C₁-C₁₂ acyl, substituted or unsubstituted C₆-C₁₂ aryl, substituted or unsubstituted C₂-C₁₀ alkenyl, substituted or unsubstituted C₂-C₁₂ alkynyl or the corresponding bridging di-, tri- or multi-units, or ammonium or phosphonium salts based on cyclic amines; adding a chromium compound and a ligand from the second vessel to the first solution to obtain a second solution; and optionally, mixing the second solution for 10 seconds to 5 hours, specifically 0.5 hours to 2.5 hours in the mixing vessel, wherein the first vessel, the second vessel, and the mixing unit, are at least partly within a temperature controlled enclosure, preferably completely within the temperature controlled enclosure.

An exemplary ligand can be, for example, Ph₂PN(iPr)P(Ph)N(iPr)H.

The addition of a chromium compound and a ligand to the first solution to obtain a second solution can further comprise introducing an inert gas, optionally pressurized, into the first vessel and/or into the second vessel via the gas inlets to convey the first solution and/or the chromium compound and the ligand into the mixing unit. Use of pressurized gas to effect transfer can prevent accidental exposure of the catalyst components to the atmosphere and/or moisture, provides an additional degree of fire safety, and eliminates the need for additional pumps and electronics thereby reducing the fluctuation induced by pump flow. The inert gas can be argon, nitrogen, helium, or the like, although N₂ may be preferred for reasons of cost.

The contents of the mixing unit can also be transferred to an oligomerization reactor by introducing an inert gas, optionally pressurized, into the mixing unit. Again, use of pressurized gas to effect transfer can prevent accidental exposure of the catalyst components to the atmosphere and/or moisture, provides an additional degree of fire safety, and eliminates the need for additional pumps and electronics thereby reducing the fluctuation induced by pump flow. The inert gas can be argon, nitrogen, helium, or the like, although N₂ may be preferred for reasons of cost.

In an embodiment, the inert gas can be introduced with a pressure of 0.5 to 3 barg (bar gauge), specifically 0.8 to 2.5 barg, and more specifically, 1.0 to 1.5 barg.

The chromium compound can be organic or inorganic salts, coordination complexes and organometallic complexes of Cr(II) or Cr(III), specifically, CrCl₃(THF)₃, Cr(III)acetylacetonate, Cr(III)octanoate, chromium hexacarbonyl, Cr(III)-2-ethylhexanoate, benzene(tricarbonyl)-chromium or Cr(III)chloride.

The ligand can have the general structure R¹R²P-N(R³)-P(R⁴)-N(R⁵)-H, wherein R¹, R², R³, R⁴ and R⁵ are independently selected from halogen, amino, trimethylsilyl, C₁-C₁₀ alkyl, substituted C₁-C₁₀ alkyl, C₆-C₁₂ aryl, and substituted C₆-C₁₂ aryl.

In an exemplary embodiment, the chromium compound and the ligand can be directly added to the first solution simultaneously. In another embodiment the chromium compound and the ligand can be dissolved in a second solvent and added to the first solution simultaneously.

The first and/or second solvent can be an aromatic or aliphatic solvent or mixtures thereof, specifically, toluene, benzene, ethylbenzene, cumene, xylenes, mesitylene, hexane, octane, cyclohexane, olefins, such as hexene, heptene, octene, or ethers, such as diethylether or tetrahydrofuran, more specifically, an aromatic solvent, and most specifically, toluene.

The co-catalyst can be trialkyl aluminum (AlR'₃ wherein R' is C₁-C₃₆ substituted or unsubstituted alkyl or C₆-C₃₆ substituted or unsubstituted aryl). The modifier can be an ammonium or phosphonium salt of the formula [ER₄]X wherein each R is independently a halogen, amino, trimethylsilyl, substituted or unsubstituted C₁-C₁₂ alkyl, substituted or unsubstituted C₃-C₈ cycloalkyl, substituted or unsubstituted C₁-C₁₂ acyl, substituted or unsubstituted C₆-C₁₂ aryl, substituted or unsubstituted C₂-C₁₀ alkenyl, substituted or unsubstituted C₂-C₁₂ alkynyl or the corresponding bridging di-, tri- or multi-units, or ammonium or phosphonium salts based on cyclic amines. In a most preferred embodiment, the modifier utilized for preparing the catalyst composition is not a chromium compound, especially not a halide-containing chromium compound. After mixing, the co-catalyst and the modifier can form a reaction product having the formula [ER₄][Al₂R'₆X]^{∗}(solvent)ₙ with 0 ≤ n ≤ 100, specifically 1 ≤ n ≤ 20, according to reaction scheme:

[ER₄]X + 2AlR'₃ + n solvent → [ER₄][Al₂R'₆X]^{∗}(solvent)ₙ.

In an embodiment, the molar ligand/Cr ratio can be 0.25 to 75, specifically, 0.5 to 50, more specifically, 0.75 to 25, and still more specifically, 0.8 to 20.

In an embodiment, the molar Al/Cr ratio can be 1.0 to 1,000, specifically, 5 to 500, and more specifically, 10 to 100.

The molar modifier/Cr ratio can be 0.1 to 100, specifically, 0.5 to 50, and more specifically, 1 to 20.

Surprisingly, it was discovered that a pre-formation unit can be provided that allows accurate dosing of the constituents of a catalyst used for ethylene oligomerization with additional benefits of reduction of plugging of internal components of the pre-formation unit, avoiding side reactions, and enhanced process performance due to the reduced plugging and avoidance of side reactions.

It was further surprisingly found that simple mixing of the four catalyst components, feasible as it might appear on laboratory scale, is not desirable for an industrial scale process. It was discovered that modifiers such as tetraphenyl phosphonium chloride or tetraalkyl ammonium chloride, are only poorly soluble, especially in aromatic solvents. In an industrial process, poorly soluble modifiers would imply the need for slurry-handling systems to achieve reasonable reproducibility concerning catalyst dosing, which would decrease process performance. Therefore, it was discovered that a precise catalyst dosing system is desirable for the process of forming a catalyst for the oligomerization of ethylene, because exothermicity/heat balance and conversion/selectivity are strong functions of catalyst concentration and, thus, need to be balanced in a very delicate manner.

Preparing a catalyst solution from all four components in one storage vessel and dosing the catalyst solution into the oligomerization reactor is not a viable industrial option either, because the catalyst solution is not entirely stable on the timescale dictated by the storage vessel/dosing system. This is because, like in many homogeneous catalyst systems, the active species is being formed only in the presence of the reactant, i.e., the ethylene. In the absence of ethylene, the catalytically active species begins to decompose over time, which leads to a loss of activity and selectivity or in the worst case to unwanted and uncontrollable side-reactions like polymerization. Generally, the shelf life of the complete pre-mixed catalyst in toluene catalysts is only a few hours. Consequently, the early preparation of the entire catalyst system would not be desirable for an industrial process.

The pre-formation unit disclosed herein can assist in alleviating these problems by providing a pre-formation unit for preparing a catalyst composition for the oligomerization of ethylene which allows mixing and dosing of the catalyst composition in a precise manner. Surprisingly, it was discovered that the combination of several different measures, including the use of flow control valves, and/or temperature control of the pre-formation unit by mounting it partially within or completely within a temperature controlled enclosure, and/or catalyst flow-control through the use of inert gas pressure results in an enhanced process in which plugging and side reactions could be significantly reduced or eliminated.

In other words, the pre-formation unit disclosed herein can provide a method for the preparation of a respective catalyst composition in an improved technologically feasible way suitable for use in industrial-scale processes.

For example, preparing a catalyst composition with the pre-formation unit as described can result in a catalyst composition that has not been degraded due to a too long residence time inside the pre-formation unit, for example greater than 8 hours, or greater than a day.

Turning now to FIG. 1, a schematic view of the pre-formation unit disclosed herein is illustrated. As shown in FIG. 1 , the reaction product (i.e., first solution) of a modifier and a co-catalyst can be first prepared and then stored in a vessel 1, whereas the chromium compound and the ligand (i.e., third solution) can be stored in a vessel 2, optionally in a solvent. Alternatively, the chromium compound and the ligand can be stored separately in individual vessels. Vessel 1 and Vessel 2 can be connected with a mixing unit 3 (i.e., pre-formation unit), which can desirably be a vessel comprising agitation means, optionally via lines 11, 12. The lines 11, 12 can each, independently, have a flow control valve 4, 5 for metering the respective first and second solutions, as appropriate, into the mixing unit 3. The mixing unit 3 can either be operated batch-wise or continuously. As an alternative, a product-flow reactor can also be used as the mixing unit 3. The mixing unit 3 can be connected to an oligomerization reactor 7 via a line 13 which also can have a flow control valve 6 for precisely metering the mixture of first and second solutions into the oligomerization reactor 7 to then start an oligomerization reaction.

Gas inlets 8 and 9 can each be connected to the vessels 1 and 2 allowing gas to be introduced into vessel 1 or vessel 2 through the gas inlets 8 and 9. By means of the inert gas, transport of solutions contained in vessel 1 and vessel 2 into the pre-formation unit 3 can be achieved. By controlling the inert gas pressure, flow velocity of the catalyst ingredients in the pre-formation unit 3 can be controlled in an easy and accurate manner.

Desirably, the residence time in the pre-formation unit 3 can be adjusted to 10 seconds to 5 hours, specifically, 5 minutes to 4 hours, more specifically, 15 minutes to 3 hours, even more specifically, 30 minutes to 2.5 hours, and still more specifically, 1 hour to 2 hours, before the catalyst composition is transferred to an oligomerization reactor 7, utilizing a flow control valve 6.

The reaction product in a storage vessel 1 can be a solution of an ionic liquid or salt, wherein the molar amount of solvent is not a fixed integer number, but varies freely, i.e., n = 0.

In storage vessel 1 and 2, the contents can be sustained at temperatures of 0°C to 50°C, specifically, 10°C to 20°C, more specifically, 15°C to 25°C, and even more specifically, 18°C to 22°C under inert atmosphere, for example N₂ or Ar.

The temperature in the pre-formation unit 3 can be 0°C to 80°C, specifically, 5°C to 70°C, more specifically, 10°C to 50°C, even more specifically, 15°C to 25°C, and even more specifically, 20°C to 24°C, and the pressure in the pre-formation unit 3 headspace can be 0.5 to 80 bar, specifically, 0.6 to 50 bar, more specifically, 0.7 to 25 bar, even more specifically, 0.8 to 2.5 bar, and still more specifically, 0.5 to 2.0 bar of an inert gas, such as N₂ or Ar.

The temperature in the catalyst composition pre-formation unit can be controlled in a precise manner by use of the temperature control enclosure 10. Precise temperature control can assist in avoiding plugging and unwanted side reactions.

The concentrations of both solutions and the dosing rate, controlled by flow control valves 4, 5 and 6, can be carefully chosen so as to adjust the total catalyst concentration in the oligomerization reactor 7 and the ligand/Cr molar ratio, the Al/Cr molar ratio and the modifier Cr molar ratio.

For example, the total concentration of the catalyst composition in the oligomerization reactor 7, expressed as concentration of Cr, can be 0.001 to 10.0 millimoles per liter (mmol/l), specifically, 0.05 to 5 mmol/l, more specifically, 0.1 to 1.0 mmol/l, and even more specifically, 0.25 to 0.75 mmol/l.

It can be desirable to define and keep constant the composition of the active catalyst composition in the mixing unit 3, i.e., pre-formation unit 3, to ensure constant catalyst dosing to the oligomerization reactor 7. This can only be achieved if the compositions in the vessels 1 and 2 are also defined and constant. Generally, the feeds to the vessels 1 and 2 can be batchwise introduced from external storage tanks. If this occurs, the defined and constant compositions in vessels 1 and 2 can be accomplished if their filling is performed offline and monitored, before their outlet streams are fed into the mixing unit 3.

Accordingly, it can be desirable for the pre-formation unit to include the following equipment as is illustrated in FIG. 1:
- Storage vessel 1 in which the reaction between the modifier and the co-catalyst is performed. Vessel 1 can be installed as 2 x 100 % units, i.e., vessel 1A and vessel 1B.
- Storage vessel 2 which contains the chromium precursor/PNPNH-ligand solution. - Vessel 1 can also be installed as 2 x 100% units, i.e., vessel 2A and vessel 2B.
- Mixing unit 3.
- Flow control valves 4, 5 and 6.
- Gas inlets 8 and 9.
- Temperature-controlled enclosure 10.
- Lines 11, 12, and 13.

During normal plant operation for example, when vessels 1A and 2A are in operation, the catalyst components from these vessels can be routed continuously, defined, and monitored by ratio control to the mixing unit 3 with constant concentrations. By means of the flow control valve 6, the active catalyst composition solution can be introduced into the oligomerization reactor 7, which can then receive the active catalyst composition at constant concentration and constant flow rate.

During this period the vessels 1B and 2B are offline, i.e., not connected to the mixing unit 3.

Modifier and co-catalyst, e.g., respectively chromium precursor/PNPNH-ligand can be fed into the vessels 1B and 2B, until in both vessels exactly the desired concentrations of the components will be achieved. Concentrations can be monitored during the filling procedure in order to achieve and confirm the required qualities. After a certain period, for example after the contents of storage vessels 1A and 1B are exhausted, feeding to the mixing unit 3 will be switched from the storage vessels 1A and 2A to the storage vessels 1B and 2B.

Whenever slight losses in catalyst activity are acceptable, the mixing unit 3 can be simplified to a static mixer, mixing the streams of the two precursor-solutions from the storage vessels 1 and 2 at ambient temperature, optionally followed by a pre-determined length of tubing so as to achieve a mean residence time of greater than or equal to 1 second before entering the oligomerization reactor 7. In this case the flow control valve 6 is not needed and the flow control valves 4 and 5 should be capable to deliver a total pressure that is greater than the process pressure in the trimerization reactor, which can generally be 1.5 to 150 bar, specifically, 5 to 100 bar, more specifically, 10 to 75 bar, even more specifically, 25 to 65 bar, and yet more specifically, 30 to 50 bar.

Likewise, in another embodiment, the two catalyst-precursor streams from vessel 1 and 2 can be mixed by combining the streams in a T-fitting, followed by a length of tubing to assure a minimum residence time of approximately 1 second.

It was surprisingly found that a method for oligomerization of ethylene can be conducted with high process stability based on the precise catalyst dosing using the pre-formation unit disclosed herein as compared to significant process disturbances without such precise catalyst dosing, i.e., without the pre-formation unit as described. For example, the pre-formation unit for preparing a catalyst composition for the oligomerization of ethylene can comprise a first vessel comprising a solution of co-catalyst and modifier, a second vessel comprising chromium compound and ligand. The first and second vessel are connected via lines to a mixing unit, with each line having a flow control valve, with the mixing unit being connected via a line, having a flow control valve, to an oligomerization reactor. Gas inlets can each be connected to the first vessel and to the second vessel. A portion of the first vessel, the second vessel, the mixing unit, the flow control valves and the gas inlets are within a temperature controlled enclosure. Optionally, the first vessel, the second vessel, the mixing unit, the flow control valves and the gas inlets can be completely contained within a temperature controlled enclosure. By containing the first vessel, the second vessel, the mixing unit, the flow control valves and the gas inlets completely within the temperature controlled enclosure, plugging can be reduced and/or avoided as well as reductions in the occurrence of side reactions and the use of flow control valves can help assist in ensuring the precise amount of catalyst is dosed in the appropriate vessels.

The ethylene oligomerization catalyst pre-formation units and methods of making a catalyst composition for the oligomerization of ethylene and uses thereof disclosed herein include at least the following embodiments:

The features disclosed in the foregoing description, in the claims and in the drawing may, both separately and in any combination thereof, be material for realizing the invention in diverse forms thereof.

All ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combination" is inclusive of blends, mixtures, alloys, reaction products, and the like. Furthermore, the terms "first," "second," and the like, herein do not denote any order, quantity, or importance, but rather are used to differentiate one element from another. The terms "a" and "an" and "the" herein do not denote a limitation of quantity, and are to be construed to cover both the singular and the plural, unless otherwise indicated herein or clearly contradicted by context. Reference throughout the specification to "one embodiment," "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

As used herein, the term "alkyl" refers to a straight or branched chain, saturated monovalent hydrocarbon group; "cycloalkyl" refers to a non-aromatic monovalent monocyclic or multicylic hydrocarbon group having at least three carbon atoms; "alkenyl" refers to a straight or branched chain monovalent hydrocarbon group having at least two carbons joined by a carbon-carbon double bond; "alkynyl" refers to a straight or branched chain monovalent hydrocarbon group having at least two carbons joined by a carbon-carbon triple bond; "aryl" refers to an aromatic monovalent group containing only carbon in the aromatic ring or rings; and "acyl" refers to an alkyl group as defined above with the indicated number of carbon atoms attached through a carbonyl carbon bridge (-C(=O)-). Where indicated, each of the foregoing groups can be unsubstituted or substituted, provided that the substitution does not significantly adversely affect synthesis, stability, or use of the compound. The term "substituted" as used herein means that at least one hydrogen on the designated atom or group is replaced with another group, provided that the designated atom's normal valence is not exceeded. When the substituent is oxo (i.e., =O), then two hydrogens on the atom are replaced. Combinations of substituents and/or variables are permissible provided that the substitutions do not significantly adversely affect synthesis or use of the compound. Unless otherwise indicated, exemplary groups that can be present on a "substituted" position include, but are not limited to, cyano; hydroxyl; nitro; azido; alkanoyl (such as a C₂₋₆ alkanoyl group such as acyl); carboxamido; C₁₋₆ or C₁₋₃ alkyl, cycloalkyl, alkenyl, and alkynyl (including groups having at least one unsaturated linkages and from 2 to 8, or 2 to 6 carbon atoms); C₁₋₆ or C₁₋₃ alkoxy groups; C₆₋₁₀ aryloxy such as phenoxy; C₁₋₆ alkylthio; C₁₋₆ or C₁₋₃ alkylsulfinyl; C₁₋₆ or C₁₋₃ alkylsulfonyl; aminodi(C₁₋₆ or C₁₋₃)alkyl; C₆₋₁₂ aryl having at least one aromatic rings (e.g., phenyl, biphenyl, naphthyl, or the like, each ring either substituted or unsubstituted aromatic); C₇₋₁₉ arylalkyl having 1 to 3 separate or fused rings and from 6 to 18 ring carbon atoms, with benzyl being an exemplary arylalkylene group; or arylalkoxy having 1 to 3 separate or fused rings and from 6 to 18 ring carbon atoms, with benzyloxy being an exemplary arylalkoxy group.

## Claims

1. An ethylene oligomerization catalyst pre-formation unit, comprising:
a first vessel comprising a solution of co-catalyst and modifier;
a second vessel comprising a chromium compound and a ligand;
wherein the first and second vessels are connected via lines to a mixing unit, wherein each line has a flow control valve, wherein the flow control valves are independently a thermal mass flow controller or a coreolis flow meter;
wherein the mixing unit is connected via a line having a flow control valve to an oligomerization reactor;
wherein gas inlets are each connected to the first vessel and to the second vessel, and wherein the first vessel, the second vessel, the mixing unit and the flow control valves are completely within a temperature controlled enclosure.

2. The pre-formation unit of Claim 1, wherein the mixing unit is a vessel comprising agitation means.

3. A method of making a catalyst composition for the oligomerization of ethylene, comprising:
preparing, in a first vessel having a first gas inlet, in a first solvent, a first solution by mixing a co-catalyst and a modifier, wherein the co-catalyst is preferably selected from trialkyl aluminum, alkyl aluminum sesquichloride, dialkyl aluminum chloride, alkyl aluminum dichloride, wherein alkyl is preferably methyl, ethyl, isopropyl or isobutyl, methylaluminoxane, or a combination thereof, and wherein the modifier is preferably selected from ammonium or phosphonium salts of the formula [H₄E]X, [H₃ER]X, [H₂ER₂]X, [HER₃]X or [ER₄]X or_HX or RX with E is N or P, X is Cl, Br or I and R is alkyl, cycloalkyl, acyl, aryl, alkenyl, alkynyl or the corresponding bridging di-, tri- or multi-units, or ammonium or phosphonium salts based on cyclic amines;
adding a chromium compound and a ligand from a second vessel having a second gas inlet to the first solution to obtain a second solution; and
optionally mixing the second solution for 10 seconds to 5 hours, preferably 0.5 hours to 2.5 hours, in a mixing unit;
wherein the first vessel, the second vessel and the mixing unit are completely within the temperature controlled enclosure; and
wherein the first and second vessels are connected via lines to a mixing unit, wherein each line has a flow control valve, wherein the flow control valves are independently a thermal mass flow controller or a coreolis flow meter.

4. The method of Claim 3, wherein the adding the chromium compound and the ligand to the first solution to obtain the second solution comprises introducing an inert gas into the first vessel and/or into the second vessel via the gas inlets to convey the first solution and/or the chromium compound and the ligand into the mixing unit.

5. The method of any of Claims 3 or 4, further comprising introducing an inert gas, preferably N₂, into the mixing unit to transfer the contents of the mixing unit to an oligomerization reactor.

6. The method of any of Claims 3 to 5, wherein the inert gas is pressurized to 0.8 to 2.5 barg, preferably 1.0 to 1.5 barg.

7. The method of any of Claims 3 to 6, wherein the chromium compound is an organic or inorganic salt, a coordination complex, and or an organometallic complex of Cr(II) or Cr(III), preferably CrCl₃(THF)₃, Cr(III)acetylacetonate, Cr(III)octanoate, chromium hexacarbonyl, Cr(III)-2-ethylhexanoate, benzene(tricarbonyl)-chromium, or Cr(III)chloride.

8. The method of any of Claims 3 to 7, wherein the ligand has the formula R¹R²P-N(R³)-P(R⁴)-N(R⁵)-H, wherein R¹, R², R³, R⁴ and R⁵ are independently selected from halogen, amino, trimethylsilyl, C₁-C₁₀ alkyl, substituted C₁-C₁₀ alkyl, C₆-C₁₂ aryl and substituted C₆-C₁₂ aryl.

9. The method of any of Claims 3 to 8, wherein the chromium compound and the ligand are added to the first solution simultaneously, optionally dissolved in a second solvent.

10. The method of any of Claims 3 to 9, wherein the first and/or second solvent is an aromatic or aliphatic solvent or a combination thereof, preferably toluene, benzene, ethylbenzene, cumene, xylenes, mesitylene, hexane, octane, cyclohexane, olefins, such as hexene, heptene, and octene, or ethers such as diethyl ether or tetrahydrofuran, more preferably an aromatic solvent, most preferably toluene.

11. The method of any of Claims 3 to 10, wherein the co-catalyst is trialkyl aluminum of the formula AlR'₃ wherein R' is a substituted or unsubstituted C₁-C₃₆ alkyl or substituted or unsubstituted C₆-C₃₆ aryl, and the modifier is an ammonium or phosphonium salt of the formula [ER₄]X, wherein each R is independently a halogen, amino, trimethylsilyl, substituted or unsubstituted C₁-C₁₂ alkyl, substituted or unsubstituted C₃-C₈ cycloalkyl, substituted or unsubstituted C₁-C₁₂ acyl, substituted or unsubstituted C₆-C₁₂ aryl, substituted or unsubstituted C₂-C₁₀ alkenyl, substituted or unsubstituted C₂-C₁₂ alkynyl or the corresponding bridging di-, tri- or multi-units, or ammonium or phosphonium salts based on cyclic amines, resulting after mixing in a reaction product having the formula [ER₄][Al₂R'₆X]^{∗}(solvent)ₙ with 0 ≤ n ≤ 100, according to reaction:
[ER₄]X + 2AlR'₃ + n solvent → [ER₄][Al₂R'₆X]^{∗}(solvent)ₙ.

12. The method of any of Claims 3 to 11, wherein the molar ligand/Cr ratio is 0.5 to 50, preferably 0.8 to 2.0.

13. The method of any of Claims 3 to 12, wherein the molar Al/Cr ratio is 1.0 to 1,000, preferably 10 to 100.

14. The method of any of Claims 3 to 13, wherein the molar modifier/Cr ratio is 0.1 to 100, preferably 1 to 20.

## Patentansprüche

1. Katalysatorvorformeinheit zur Ethylenoligomerisierung, umfassend:
einen ersten Behälter, der eine Lösung aus einem Cokatalysator und einem Modifikator umfasst;
einen zweiten Behälter, der eine Chromverbindung und einen Liganden umfasst;
wobei der erste und zweite Behälter durch Leitungen mit einer Mischeinheit verbunden sind, wobei jede Leitung ein Durchflussregelventil aufweist, wobei die Durchflussregelventile unabhängig ein thermischer Massendurchflussregler oder ein Coreolis-Durchflussmesser sind;
wobei die Mischeinheit durch eine Leitung, die ein Durchflussregelventil aufweist, mit einem Oligomerisierungsreaktor verbunden ist;
wobei Gaseinlässe jeweils mit dem ersten Behälter und dem zweiten Behälter verbunden sind und wobei sich der erste Behälter, der zweite Behälter, die Mischeinheit und die Durchflussregelventile vollständig in einem temperaturgesteuerten Gehäuse befinden.

2. Vorformeinheit nach Anspruch 1, wobei die Mischeinheit ein Behälter ist, der eine Rührvorrichtung umfasst.

3. Verfahren zur Fertigung einer Katalysatorzusammensetzung für die Oligomerisierung von Ethylen, umfassend:
Herstellen einer ersten Lösung in einem ersten Lösungsmittel in einem ersten Behälter, der einen ersten Gaseinlass aufweist, durch Mischen eines Cokatalysators mit einem Modifikator, wobei der Cokatalysator vorzugsweise aus Trialkylaluminium, Alkylaluminiumsesquichlorid, Dialkylaluminiumchlorid oder Alkylaluminiumdichlorid ausgewählt ist, wobei Alkyl vorzugsweise Methyl, Ethyl, Isopropyl oder Isobutyl, Methylaluminoxan oder eine Kombination davon ist und wobei der Modifikator vorzugsweise aus Ammonium- oder Phosphoniumsalzen der Formel [H₄E]X, [H₃ER]X, [H₂ER₂] X, [HER₃] X oder [ER₄]X oder HX oder RX ist, wobei es sich bei E um N oder P handelt, es sich bei X um Cl, Br oder I handelt und es sich bei R um Alkyl, Cycloalkyl, Acyl, Aryl, Alkenyl, Alkinyl oder die entsprechenden Brücken-di-, -tri- oder -multi-Einheiten oder auf cyclischen Aminen basierenden Ammonium- oder Phosphoniumsalze handelt;
Hinzufügen einer Chromverbindung und eines Liganden aus einem zweiten Behälter, der einen zweiten Gaseinlass aufweist, zu der ersten Lösung, um eine zweite Lösung zu erhalten; und
gegebenenfalls Mischen der zweiten Lösung 10 Sekunden bis 5 Stunden lang, vorzugsweise 0,5 Stunden bis 2,5 Stunden lang, in einer Mischeinheit;
wobei sich der erste Behälter, der zweite Behälter und die Mischeinheit vollständig in dem temperaturgesteuerten Gehäuse befinden; und
wobei der erste und zweite Behälter durch Leitungen mit einer Mischeinheit verbunden sind, wobei jede Leitung ein Durchflussregelventil aufweist, wobei die Durchflussregelventile unabhängig ein thermischer Massendurchflussregler oder ein Coreolis-Durchflussmesser sind.

4. Verfahren nach Anspruch 3, wobei das Hinzufügen der Chromverbindung und des Liganden zu der ersten Lösung, um die zweite Lösung zu erhalten, Einführen eines Inertgases durch die Gaseinlässe in den ersten Behälter und/oder den zweiten Behälter umfasst, um die erste Lösung und/oder die Chromverbindung und den Liganden in die Mischeinheit zu übertragen.

5. Verfahren nach einem der Ansprüche 3 oder 4, ferner umfassend Einführen eines Inertgases, vorzugsweise N₂, in die Mischeinheit, um die Inhalte der Mischeinheit in einen Oligomerisationsreaktor zu übertragen.

6. Verfahren nach einem der Ansprüche 3 bis 5, wobei das Inertgas auf 0,8 bis 2,5 barg, vorzugsweise 1,0 bis 1,5 barg, unter Druck gesetzt wird.

7. Verfahren nach einem der Ansprüche 3 bis 6, wobei die Chromverbindung Folgendes ist: ein organisches oder anorganisches Salz, ein Koordinierungskomplex und/oder ein Anorganometallkomplex aus Cr(II) oder Cr(III), vorzugsweise CrCl₃(THF)₃, Cr(III)-acetylacetonat, Cr(III)-octanoat, Chromhexacarbonyl, Cr(III)-2-ethylhexanoat, Benzol(tricarbonyl)-chrom oder Cr(III)-chloride.

8. Verfahren nach einem der Ansprüche 3 bis 7, wobei der Ligand die Formel R¹R²P-N(R³)-P(R⁴)-N(R⁵)-H aufweist, wobei R¹, R², R³, R⁴ und R⁵ unabhängig aus Halogen-, Amino-, Trimethylsilyl, C₁-C₁₀-Alkyl, substituiertem C₁-C₁₀-Alkyl, C₆-C₁₂-Aryl und substituiertem C₆-C₁₂-Aryl ausgewählt sind.

9. Verfahren nach einem der Ansprüche 3 bis 8, wobei die Chromverbindung und der Ligand gleichzeitig, gegebenenfalls in eine zweite Lösung aufgelöst, zu der ersten Lösung hinzugefügt werden.

10. Verfahren nach einem der Ansprüche 3 bis 9, wobei das erste und/oder zweite Lösungsmittel ein aromatisches oder aliphatisches Lösungsmittel oder eine Kombination davon ist, vorzugsweise Toluol, Benzol, Ethylbenzol, Cumol, Xylole, Mesitylen, Hexan, Octan, Cyclohexan, Olefine, wie etwa Hexen, Hepten und Octen, oder Ether, wie etwa Diethylether oder Tetrahydrofuran, noch bevorzugter ein aromatisches Lösungsmittel, am bevorzugtesten Toluol.

11. Verfahren nach einem der Ansprüche 3 bis 10, wobei der Cokatalysator Trialkylaluminium der Formen AIR'₃ ist, wobei R' ein substituiertes oder unsubstituiertes C₁-C₃₆-Alkyl oder ein substituiertes oder unsubstituiertes C₆-C₃₆-Aryl ist, und der Modifikator ein Ammonium- oder Phosphoniumsalz der Formel [ER₄]X ist, wobei jedes R unabhängig Folgendes ist: ein Halogen-, Amino-, Trimethylsilyl, ein substituiertes oder unsubstituiertes C₁-C₁₂-Alkyl, ein substituiertes oder unsubstituiertes C₃-C₈-Cycloalkyl, ein substituiertes oder unsubstituiertes C₁-C₁₂-Acyl, ein substituiertes oder unsubstituiertes C₆-C₁₂-Aryl, ein substituiertes oder unsubstituiertes C₂-C₁₀-Alkenyl, ein substituiertes oder unsubstituiertes C₂-C₁₂-Alkinyl oder die entsprechenden Brücken-di-, -tri- oder -multi-Einheiten oder auf cyclischen Aminen basierende Ammonium- oder Phosphoniumsalze, wobei sich nach dem Mischen ein Reaktionsprodukt der Formel [ER₄][Al₂R'₆X]*(Lösungsmittel)ₙ mit 0≤n≤100 ergibt, gemäß der Reaktion:
[ER₄]X + 2AlR'₃ + n Lösungsmittel → [ER₄][Al₂R'₆X]*(Lösungsmittel)ₙ.

12. Verfahren nach einem der Ansprüche 3 bis 11, wobei das Molarverhältnis Ligand/Cr 0,5 bis 50 beträgt, vorzugsweise 0,8 bis 2,0.

13. Verfahren nach einem der Ansprüche 3 bis 12, wobei das Molarverhältnis Al/Cr 1,0 bis 1.000 beträgt, vorzugsweise 10 bis 100.

14. Verfahren nach einem der Ansprüche 3 bis 13, wobei das Molarverhältnis Modifikator/Cr 0,1 bis 100 beträgt, vorzugsweise 1 bis 20.

## Revendications

1. Dispositif de préformation de catalyseur d'oligomérisation d'éthylène, comprenant :
un premier récipient comprenant une solution de co-catalyseur et de modificateur ;
un second récipient comprenant un composé du chrome et un ligand ;
dans lequel les premier et second récipients sont raccordés par des conduites à un dispositif de mélange, dans lequel chaque conduite a une vanne de régulation de débit, dans lequel les vannes de régulation de débit sont indépendamment un régulateur thermique de débit massique ou un débitmètre à effet Coriolis ;
dans lequel le dispositif de mélange est raccordé par l'intermédiaire d'une conduite ayant une vanne de régulation de débit à un réacteur d'oligomérisation ;
dans lequel des arrivées de gaz sont chacune raccordées au premier récipient et au second récipient, et dans lequel le premier récipient, le second récipient, le dispositif de mélange et les vannes de régulation de débit sont complètement à l'intérieur d'une enceinte à température régulée.

2. Dispositif de préformation selon la revendication 1, dans lequel le dispositif de mélange est un récipient comprenant des moyens d'agitation.

3. Procédé de préparation d'une composition de catalyseur pour l'oligomérisation d'éthylène, comprenant :
la préparation, dans un premier récipient ayant une première arrivée de gaz, dans un premier solvant, d'une première solution en mélangeant un co-catalyseur et un modificateur, dans laquelle le co-catalyseur est de préférence choisi parmi un trialkyl aluminium, un sesquichlorure d'alkyl aluminium, un chlorure de dialkyl aluminium, un dichlorure d'alkyl aluminium, où alkyl est de préférence méthyl, éthyl, isopropyl ou isobutyl, un méthylaluminoxane, ou une combinaison de ceux-ci, et dans laquelle le modificateur est de préférence choisi parmi les sels d'ammonium ou de phosphonium de formule [H₄E]X, [H₃ER]X, [H₂ER₂]X, [HER₃]X ou [ER₄]X ou HX ou RX, où E est N ou P, X est Cl, Br ou I et R est alkyl, cycloalkyl, acyl, aryl, alcényl, alcynyl ou les di-, tri- ou multi-unités pontantes correspondantes, ou les sels d'ammonium ou de phosphonium à base d'amines cycliques ;
l'addition d'un composé du chrome et d'un ligand à partir d'un second récipient ayant une seconde arrivée de gaz à la première solution pour obtenir une seconde solution ; et
facultativement, le mélange de la seconde solution pendant 10 secondes à 5 heures, de préférence 0,5 heure à 2,5 heures, dans un dispositif de mélange ;
dans lequel le premier récipient, le second récipient et le dispositif de mélange sont complètement à l'intérieur de l'enceinte à température régulée ; et
dans lequel les premier et second récipients sont raccordés par des conduites à un dispositif de mélange, dans lequel chaque conduite a une vanne de régulation de débit, dans lequel les vannes de régulation de débit sont indépendamment un régulateur thermique de débit massique ou un débitmètre à effet Coriolis.

4. Procédé selon la revendication 3, dans lequel l'addition du composé du chrome et du ligand à la première solution pour obtenir la seconde solution comprend l'introduction d'un gaz inerte dans le premier récipient et/ou dans le second récipient par l'intermédiaire des arrivées de gaz pour véhiculer la première solution et/ou le composé du chrome et le ligand jusque dans le dispositif de mélange.

5. Procédé selon l'une quelconque des revendications 3 ou 4, comprenant en outre l'introduction d'un gaz inerte, de préférence N₂, dans le dispositif de mélange pour transférer le contenu du dispositif de mélange à un réacteur d'oligomérisation.

6. Procédé selon l'une quelconque des revendications 3 à 5, dans lequel le gaz inerte est mis sous une pression de 0,8 à 2,5 barg, de préférence 1,0 à 1,5 barg.

7. Procédé selon l'une quelconque des revendications 3 à 6, dans lequel le composé du chrome est un sel organique ou inorganique, un complexe de coordination et/ou un complexe organométallique de Cr(II) ou Cr(III), de préférence CrCl₃(THF)₃, acétylacétonate de Cr(III), octanoate de Cr(III), chrome hexacarbonyle, 2-éthylhexanoate de Cr(III), benzène(tricarbonyl)-chrome, ou chlorure de Cr(III).

8. Procédé selon l'une quelconque des revendications 3 à 7, dans lequel le ligand a la formule R¹R²P-N(R³)-P(R⁴)-N(R⁵)-H, où R¹, R², R³, R⁴ et R⁵ sont indépendamment choisis parmi halogène, amino, triméthylsilyl, alkyl en C₁-C₁₀, alkyl en C₁-C₁₀ substitué, aryle en C₆-C₁₂ et aryle en C₆-C₁₂ substitué.

9. Procédé selon l'une quelconque des revendications 3 à 8, dans lequel le composé du chrome et le ligand sont ajoutés à la première solution simultanément, facultativement dissous dans un second solvant.

10. Procédé selon l'une quelconque des revendications 3 à 9, dans lequel le premier et/ou second solvant est un solvant aromatique ou aliphatique ou une combinaison de ceux-ci, de préférence le toluène, le benzène, l'éthylbenzène, le cumène, les xylènes, le mésitylène, l'hexane, l'octane, le cyclohexane, les oléfines, comme l'hexène, l'heptène et l'octène, ou les éthers tels que l'éther diéthylique ou le tétrahydrofuranne, de préférence encore un solvant aromatique, de toute préférence le toluène.

11. Procédé selon l'une quelconque des revendications 3 à 10, dans lequel le co-catalyseur est un trialkyl aluminium de formule AlR'₃, où R' est un alkyle en C₁-C₃₆ substitué ou non substitué ou un aryle en C₆-C₃₆ substitué ou non substitué, et le modificateur est un sel d'ammonium ou de phosphonium de formule [ER₄]X, où chaque R est indépendamment un halogène, amino, triméthylsilyl, alkyl en C₁-C₁₂ substitué ou non substitué, cycloalkyl en C₃-C₈ substitué ou non substitué, acyl en C₁-C₁₂ substitué ou non substitué, aryl en C₆-C₁₂ substitué ou non substitué, alcényl en C₂-C₁₀ substitué ou non substitué, alcynyl en C₂-C₁₂ substitué ou non substitué ou les di-, tri- ou multi-unités pontantes correspondantes, ou des sels d'ammonium ou de phosphonium à base d'amines cycliques, conduisant après le mélange à un produit de réaction ayant la formule
[ER₄][Al₂R'₆X]^{∗}(solvant)ₙ avec 0 ≤ n ≤ 100, d'après la réaction :
[ER₄]X + 2AlR'₃ + n solvant →[ER₄][Al₂R'₆X]^{∗}(solvant)ₙ.

12. Procédé selon l'une quelconque des revendications 3 à 11, dans lequel le rapport molaire ligand/Cr est de 0,5 à 50, de préférence 0,8 à 2,0.

13. Procédé selon l'une quelconque des revendications 3 à 12, dans lequel le rapport molaire Al/Cr est de 1,0 à 1 000, de préférence 10 à 100.

14. Procédé selon l'une quelconque des revendications 3 à 13, dans lequel le rapport molaire modificateur/Cr est de 0,1 à 100, de préférence 1 à 20.
